# EUROPÄISCHE PATENTSCHRIFT

(11) **EP 2 510 610 B1**
(45) Veröffentlichungstag und Bekanntmachung des Hinweises auf die Patenterteilung: **30.04.2014**
(21) Anmeldenummer: 10782328.8
(22) Anmeldetag: 01.12.2010
(51) Int. Cl.: H02P 7/29

(54) **ELEKTROMOTOR MIT EINEM PULSWEITENMODULATOR**
ELECTRIC MOTOR WITH A PULSE WIDTH MODULATOR
MOTEUR ÉLECTRIQUE AVEC UN MODULATEUR D'AMPLITUDE D'IMPULSION

(30) Priorität: 08.12.2009 DE 102009047645
(43) Veröffentlichungstag der Anmeldung: 17.10.2012
(73) Patentinhaber: Robert Bosch GmbH, 70442 Stuttgart (DE)
(72) Erfinder: LURK, Volker, 77652 Offenburg (DE); HABERL, Nikolas, 76547 Sinzheim (DE); FISCHER, Frank, 77815 Buehl (DE); PODDEY, Christian, 76470 Oetigheim (DE); STIEFEL, Tobias, 76534 Steinbach (DE); KOERNER, Michael, 77815 Buehl (DE)
(86) Internationale Anmeldenummer: PCT/EP2010/068639
(87) Internationale Veröffentlichungsnummer: WO 2011/069869

(56) Entgegenhaltungen:
- EP-A1- 0 366 620
- DE-A1- 10 102 038
- US-A- 5 339 013

## Beschreibung

### Stand der Technik

Die Erfindung betrifft einen Elektromotor mit einem Stator und mit einem Rotor. Der Elektromotor weist auch eine Steuereinheit auf, wobei die Steuereinheit mit dem Stator und/oder dem Rotor verbunden und ausgebildet ist, den Stator und/oder den Rotor zum Drehbewegen des Rotors zu bestromen.

Aus der DE 10 2007 031 548 A1 ist ein Elektromotor und ein Verfahren zum Ansteuern des Elektromotors bekannt, bei dem ein Pulsweiten-Modulator alternierend zwei Halbleiterschalter durchschaltet. Durch das alternierende Durchschalten der zwei Halbleiterschalter wird eine gleichmäßige Erwärmung aller Halbleiter bewirkt. Das Dokument DE 10102038 schlägt vor, Verluste und Störemissionen durch zufälliges oder regelmäßiges Verändern der Schaltfrequenz zu reduzieren.

### Offenbarung der Erfindung

Erfindungsgemäß weist die Steuereinheit einen Pulsweiten-Modulator auf, welcher ausgebildet ist, zum Steuern einer Leistungsabgabe des Elektromotors, eine vorbestimmte Zahl zueinander verschiedener Bestromungsmuster zu erzeugen. Die Bestromungsmuster repräsentieren jeweils eine Leistungsabgabe des Elektromotors, und weisen bevorzugt eine zeitliche Folge von Strompulsen mit jeweils einer Strompulsdauer und weiter bevorzugt Pulspausen mit jeweils einer Pulspausendauer auf.

Die Steuereinheit ist ausgebildet, zum Ansteuern des Elektromotors - bevorzugt mit einer anderen Leistung als durch ein Bestromungsmuster repräsentiert - während eines Zeitintervalls des Ansteuerns den Elektromotor gemäß wenigstens zwei zueinander verschiedenen Bestromungsmustern derart zu bestromen, dass eine Leistungsabgabe des Elektromotors im zeitlichen Mittel des Zeitintervalls des Ansteuerns, insbesondere vom Beginn bis zum Ende des Zeitintervalls, von den durch die Bestromungsmuster im Zeitintervall des Ansteuerns repräsentierten Leistungsabgaben verschieden ist. Das Zeitintervall des Ansteuerns wird um Folgenden auch Zeitintervall genannt.

Durch den so ausgebildeten Pulsweiten-Modulator kann vorteilhaft wenigstens eine Leistungsabgabe des Elektromotors erzeugt werden, welche von den durch die vorbestimmten Bestromungsmuster repräsentierten Leistungsabgaben verschieden ist, insbesondere größer oder kleiner ist. Weiter vorteilhaft können so mittels des Elektromotors Leistungsabgaben vermieden werden, welche jeweils als Bestromungsmuster mit einer zeitlichen Folge von Strompulsen in einer Leistungsendstufe eine Verlustleistung erzeugen, welche die Leistungsendstufe schädigen können. Weiter vorteilhaft können so Bestromungsmuster vermieden werden, welche Schaltzeiten einer Leistungsendstufe erfordern, die wegen einer zu geringen Flankensteilheit von Schaltflanken der Leistungsendstufe nicht möglich wären.

In einer bevorzugten Ausführungsform des Elektromotors ist die Leistungsabgabe des Elektromotors im zeitlichen Mittel des Zeitintervalls größer als die kleinste durch ein Bestromungsmuster repräsentierte Leistungsabgabe im Zeitintervall. Dadurch kann vorteilhaft eine Leistungsabgabe des Elektromotors eingestellt werden, welche beispielsweise im oberen Drittel eines Leistungsabgabebereichs zwischen Null Prozent und 100 Prozent liegt. Beispielsweise ist bei Leistungsabgaben von kleiner als 100 Prozent die Verlustleistung in der Leistungsendstufe hoch, beziehungsweise eine erforderliche Flankensteilheit einer Schaltflanke sehr steil.

In einer bevorzugten Ausführungsform ist die Steuereinheit ausgebildet, Bestromungsmusterintervalle jeweils mit einer Zeitdauer kleiner als das Zeitintervall zu erzeugen, und den Elektromotor während des Bestromungsmusterintervalls mit einem vorbestimmten Bestromungsmuster zu bestromen, wobei das Zeitintervall nur Bestromungsmusterintervalle aufweist. Bevorzugt wechseln die zueinander verschiedenen Bestromungsmusterintervalle im Zeitintervall des Ansteuerns maximal häufig einander ab.

Dadurch wird vorteilhaft erreicht, dass das Zeitintervall somit keine Bestromungsmusterpausen aufweist. Das Zeitintervall ist somit ausblendfensterfrei. Weiter vorteilhaft wird dadurch erreicht, dass ein Drehmoment des Elektromotors zu jedem Bruchteil des Zeitintervalls zur Verfügung steht.

In einer bevorzugten Ausführungsform ist die Zeitdauer der Bestromungsmusterintervalle jeweils gleich lang. Dadurch kann vorteilhaft ein Taktgeber, welcher die Bestromungsmusterintervalle erzeugt, die Bestromungsmusterintervalle jeweils mit derselben Zeitdauer erzeugen.

In einer bevorzugten Ausführungsform des Elektromotors beträgt die Leistungsabgabe des Elektromotors im Zeitintervall größer als 80 Prozent, bevorzugt größer als 90 Prozent, und kleiner als 100 Prozent der maximalen Leistungsabgaben des Elektromotors.

So können vorteilhaft Verlustleistungen, welche bei einer Leistungsabgabe von größer als 80 Prozent, bevorzugt größer als 90 Prozent und kleiner als 100 Prozent der maximalen Leistungsabgabe mit einem Bestromungsmuster erzeugt werden, welches den Stator und/oder den Rotor pulsweitenmoduliert betreibt, vermieden werden. Beispielsweise ist die Verlustleistung in der Leistungsendstufe bei einer Leistungsabgabe von 100 Prozent aufgrund fehlender Schaltverluste geringer als beispielsweise bei 99 Prozent..

In einer vorteilhaften Ausführungsform des Elektromotors ist der Elektromotor ein bürstenkommutierter Gleichstrommotor. Der bürstenkommutierte Elektromotor weist beispielsweise zwei oder vier Bürsten, insbesondere Kohlebürsten auf. Beispielsweise ist der Gleichstrommotor ein Reihenschlussmotor, bei dem der Rotor mit dem Stator elektrisch in Serie geschaltet ist. In einer anderen Ausführungsform ist der Gleichstrommotor ein Nebenschlussmotor, bei dem der Stator und der Rotor parallel zueinander geschaltet sind.

Anders als bei dem Reihenschluss- oder Nebenschlussmotor kann der Elektromotor vorteilhaft einen bevorzugt permanentmagnetisch ausgebildeten Stator aufweisen.

In einer bevorzugten Ausführungsform des Elektromotors ist die Steuereinheit ausgebildet, den Elektromotor mit wenigstens drei oder genau drei zueinander verschiedenen, jeweils einen Betriebszustand repräsentierenden Zeitintervallen anzusteuern, wobei ein Betriebszustand der Betriebszustände das Zeitintervall mit wenigstens zwei zueinander verschiedenen Bestromungsmustern aufweist, wobei ein weiteres Zeitintervall maximaler Leistung nur dass die maximale Leistungsabgabe repräsentierende Bestromungsmuster aufweist, und ein weiteres Zeitintervall nur eines der vorbestimmten Bestromungsmuster aufweist, welches eine kleinere Leistungsabgabe repräsentiert als die maximale Leistungsabgabe. Dadurch kann der Elektromotor vorteilhaft mit wenigstens drei Betriebszuständen betrieben werden. Von den wenigstens drei Betriebszuständen repräsentiert ein Betriebszustand den Betriebszustand mit maximaler Leistung, ein weiterer Betriebszustand den mit kleinerer Leistungsabgabe als der maximalen Leistung und ein verbotener Betriebszustand den Betriebszustand, in dem die Steuereinheit die Leistungsendstufe modulierend mit zueinander verschiedenen Bestromungsmustern ansteuert.

Die Erfindung betrifft auch ein Verfahren zum Betreiben eines Elektromotors, bei dem ein Stator und/oder ein Rotor des Elektromotors zum Drehbewegen des Rotors bestromt wird, wobei der Elektromotor zum Steuern einer Leistungsabgabe des Elektromotors mit wenigstens einem aus einer vorbestimmten Zahl zueinander verschiedener Bestromungsmuster angesteuert wird. Die Bestromungsmuster repräsentieren jeweils eine Leistungsabgabe des Elektromotors und weisen bevorzugt eine zeitliche Folge von Strompulsen mit jeweils einer Strompulsdauer und weiter bevorzugt Pulspausen mit einer Pulspausendauer auf, wobei zum Ansteuern des Elektromotors mit einer anderen Leistung als durch ein vorbestimmtes Bestromungsmuster repräsentiert, während eines Zeitintervalls des Ansteuerns der Elektromotor mit wenigstens zwei zueinander verschiedenen Bestromungsmustern derart bestromt wird, dass eine Leistungsabgabe des Elektromotors im zeitlichen Mittel des Zeitintervalls, insbesondere vom Beginn bis zum Ende des Zeitintervalls, von den durch die Bestromungsmuster im Zeitintervall repräsentierten Leistungsabgaben verschieden ist.

In einer bevorzugten Variante des Verfahrens ist die Leistungsabgabe des Elektromotors im zeitlichen Mittel des Zeitintervalls größer als die kleinste durch ein Bestromungsmuster repräsentierte Leistungsabgabe im Zeitintervall.

In einer bevorzugten Ausführungsform des Verfahrens werden zum Bestromen des Elektromotors Bestromungsmusterintervalle jeweils mit einer Zeitdauer kleiner als das Zeitintervall erzeugt, und der Elektromotor während der Betromungsmusterintervalle mit einem vorbestimmten Bestromungsmuster bestromt, wobei das Zeitintervall nur Bestromungsmusterintervalle aufweist.

Die Erfindung wird nun im Folgenden anhand von weiteren Ausführungsbeispielen und anhand von Figuren beschrieben. Weitere vorteilhafte Ausführungsvarianten ergeben sich aus den in den abhängigen Ansprüchen beschriebenen Merkmalen, sowie aus den in der Figurenbeschreibung beschriebenen Merkmalen.
Figur 1 zeigt ein Ausführungsbeispiel für einen Elektromotor;
Figur 2 zeigt ein Ausführungsbeispiel für eine Tabelle in welcher Leistungsabgaben und den Leistungsabgaben entsprechende Kombinationen von Bestromungsmustern gegenübergestellt sind;
Figur 3 zeigt ein Ausführungsbeispiel für einen zeitlichen Verlauf einer Leistungsabgabe des Elektromotors, welcher drei zueinander verschiedene Bereiche aufweist;
Figur 4 zeigt ein Diagramm, in welchem Leistungskurven dargestellt sind, welche jeweils eine Verlustleistung der Leistungsendstufe des Elektromotors repräsentieren;
Figur 5 zeigt ein Ausführungsbeispiel für ein Verfahren zum Betreiben eines Elektromotors.

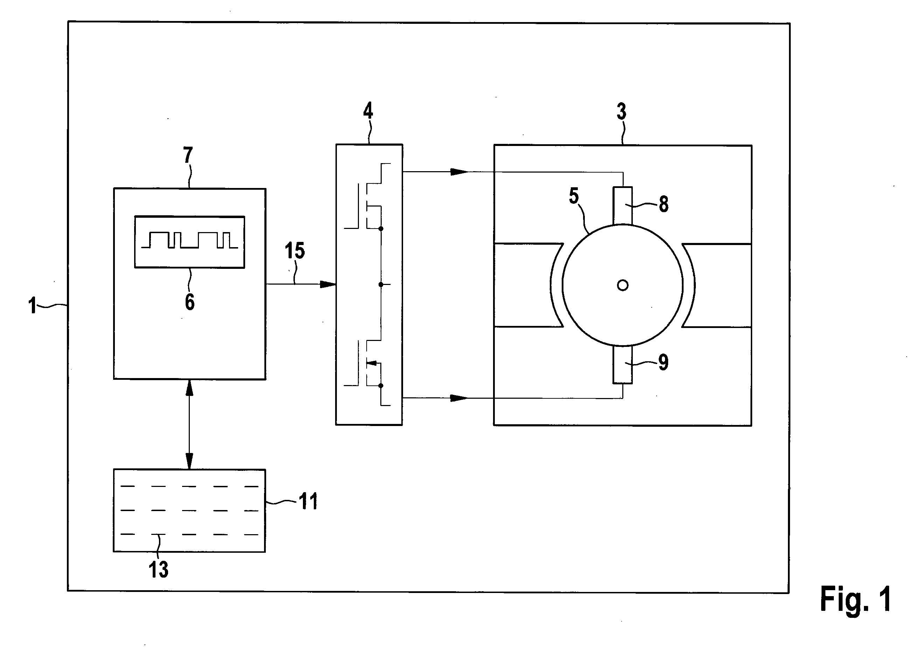

Figur 1 zeigt ein Ausführungsbeispiel für einen Elektromotor 1. Der Elektromotor 1 weist einen Stator drei und einen Rotor 5 auf. Der Elektromotor 1 weist auch eine Steuereinheit 7 auf, wobei die Steuereinheit 7 mit dem Rotor 5 über Kohlebürsten 8 und 9 verbunden ist. Der Stator des Elektromotors ist in diesem Ausführungsbeispiel permanentmagnetisch ausgebildet.

Die Steuereinheit 7 ist mit einem Speicher 11 verbunden, welcher ausgebildet ist, eine Vielzahl von Bestromungsmustern vorrätig zu halten, von denen das Bestromungsmuster 13 beispielhaft bezeichnet ist. Die Bestromungsmuster werden jeweils durch einen Datensatz repräsentiert. Die Steuereinheit 7 ist ausgebildet, wenigstens ein Bestromungsmuster, beispielsweise das Bestromungsmuster 13 aus dem Speicher 11 auszulesen und mittels des Pulsweitenmodulators 6 eine zeitliche Folge von Strompulsen mit jeweils einer Strompulsdauer oder zusätzlich Pulspausen mit jeweils einer Pulspausendauer zu erzeugen, wobei die zeitliche Folge von Strompulsen oder zusätzlich Pulspausen zusammen das Bestromungsmuster repräsentieren. Die Steuereinheit 7 ist mittels einer Verbindungsleitung 15 mit der Leistungsendstufe 4 verbunden. Die Steuereinheit 7 ist ausgebildet, die Leistungsendstufe 4 über die Verbindungsleitung 15 gemäß dem Bestromungsmuster anzusteuern. Die Leistungsendstufe 4 bestromt den Rotor 5 des Elektromotors über die Kohlebürsten 8 und 9 gemäß dem Bestromungsmuster. Der Elektromotor 1 erzeugt dann eine durch das Bestromungsmuster repräsentierte Leistungsabgabe.

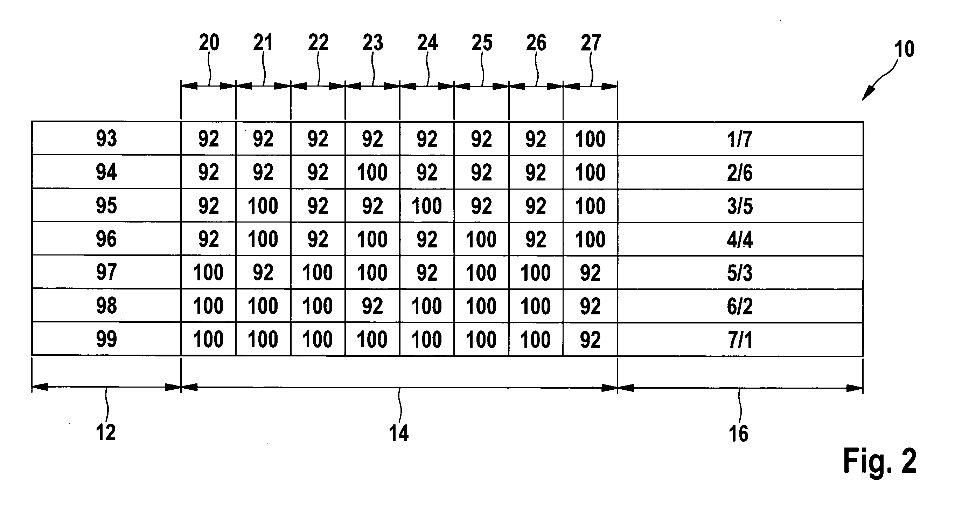

Figur 2 zeigt eine Tabelle 10, in welcher vorbestimmte Leistungsabgaben des Elektromotors in einer Spalte 12 dargestellt sind, welche jeweils eine zu erzeugende Leistungsabgabe des Elektromotors im Zeitintervall 14 des Ansteuerns repräsentieren. In Spalte 16 sind Schaltwechsel-Verhältnisse zu den entsprechenden Zeitintervallen 14 angegeben.

Die Spalten 20, 21, 22, 23, 24, 25, 26 und 27 repräsentieren jeweils ein Bestromungsmusterintervall, wobei in dem Bestromungsmusterintervall die Leistungsendstufe mit einem vorbestimmten Bestromungsmuster bestromt wird.

Die Steuereinheit des Elektromotors ist beispielsweise ausgebildet, zum Erzeugen einer effektiven Leistungsabgabe von 93% die Leistungsendstufe während des Bestromungsmusterintervalls 20 mit einem Bestromungsmuster anzusteuern, welches eine Leistungsabgabe von 92% bewirkt, im Bestromungsmusterintervall 21 eine Leistungsabgabe von 92% bewirkt, im Bestromungsmusterintervall 22 eine Leistungsabgabe von 92% bewirkt, im Bestromungsmusterintervall 23 eine Leistungsabgabe von 92% bewirkt, im Bestromungsmusterintervall 24 eine Leistungsabgabe von 92% bewirkt, im Bestromungsmusterintervall 25 eine Leistungsabgabe von 92% bewirkt, im Bestromungsmusterintervall 26 eine Leistungsabgabe von 92% bewirkt, und im Bestromungsmusterintervall 27 eine Leistungsabgabe von 100% bewirkt, jeweils bezogen auf eine volle Leistungsabgabe des Elektromotors. Das Verhältnis zwischen dem Bestromungsmusterintervall mit 100% Leistungsabgaben und den Bestromungsmusterintervalle mit 92% Leistungsaufgabe beträgt in diesem Fall eins zu sieben. Die zueinander verschiedenen Bestromungsmusterintervalle wechseln im Zeitintervall 14 des Ansteuerns maximal häufig einander ab, so dass Bestromungsmusterintervalle mit einer größeren Verlustleistung als wenigstens ein anderes Bestromungsmusterintervall im Zeitintervall möglichst gleichmäßig verteilt sind.

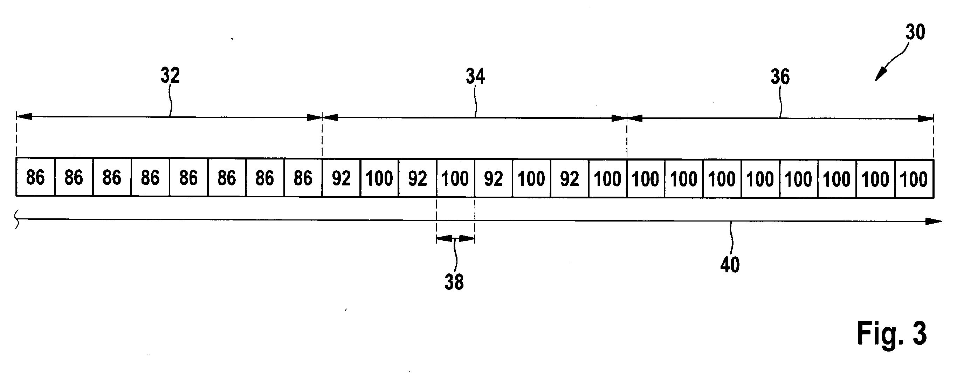

Figur 3 zeigt einen Zeitverlauf einer Leistungsabgabe des Elektromotors, beispielsweise des in Figur 1 dargestellten Elektromotors 1.

Der Zeitverlauf 30 zeigt eine Zeitachse 40, sowie drei Zeitbereiche 32, 34 und 36. Während des Zeitbereichs 32 wird der Rotor 5 des in Figur 1 gezeigten Elektromotors von der Steuereinheit 7 mit einem Bestromungsmuster angesteuert, welches eine Leistungsabgaben des Elektromotors 1 von 86 Prozent der vollen Leistungsabgabe repräsentiert. Während des Zeitbereichs 34, welcher dem vorgenannten Zeitintervall entspricht, wird der Elektromotor mit zwei zueinander verschiedenen Bestromungsmustern angesteuert, welche in diesem Beispiel im Zeitintervall jeweils gleichermaßen enthalten sind.

Das Zeitintervall 34 umfasst dazu eine Mehrzahl von Bestromungsmusterintervallen, in diesem Ausführungsbeispiel 8 Bestromungsmusterintervalle, von denen das Bestromungsmusterintervall 38 beispielhaft bezeichnet ist. Während der Bestromungsmusterintervalle wird die Leistungsendstufe 4 des Elektromotors 1 in Figur 1 mit jeweils einem Bestromungsmuster angesteuert. Das Bestromungsmuster repräsentiert eine Leistungsabgabe, welche in Figur 3 Feldern der Zeitbereiche 32, 34 und 36 jeweils angegeben ist. Die Zeitbereiche 32, 34 und 36 repräsentieren somit jeweils einen Betriebszustand des Elektromotors.

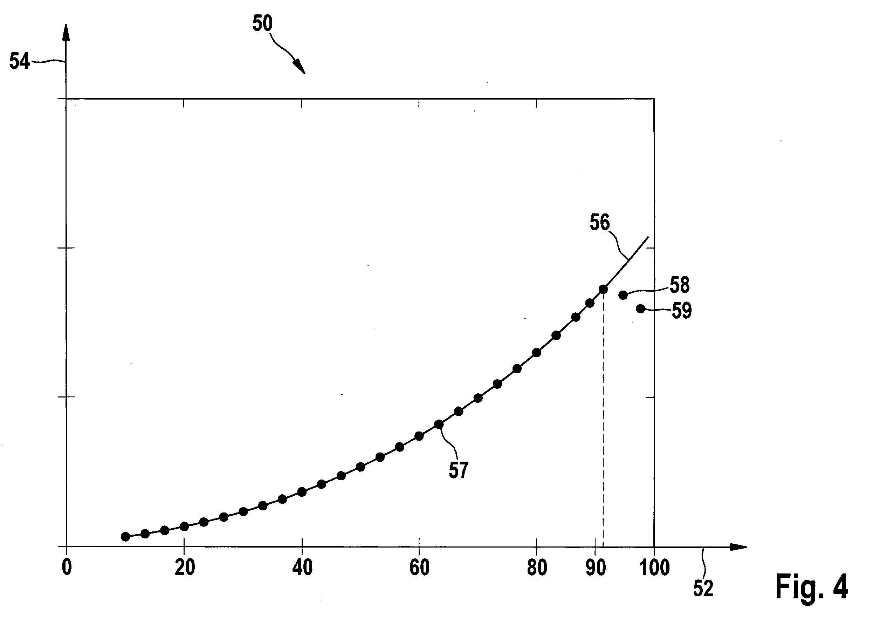

Figur 4 zeigt ein Diagramm 50. Das Diagramm 50 weist eine Abszisse 52 und eine Ordinate 54 auf. Die Abszisse 52 repräsentiert eine Leistungsabgabe des in Figur 1 dargestellten Elektromotors 1, die Ordinate 54 repräsentiert eine Verlustleistung der Endstufe 4 des Elektromotors 1.

Dargestellt ist eine Kurve 56, welche eine Verlustleistung des Elektromotors 1 repräsentiert, der mit nur einem Bestromungsmuster der vorbestimmten Bestromungsmuster zum Erzeugen einer Leistungsabgabe angesteuert wird. Bei 100 Prozent Leistungsabgabe ist die Verlustleistung beispielsweise genauso groß wie bei 70 Prozent Leistungsabgabe.

Dargestellt ist auch eine punktierte Kurve, von denen der Punkt 57 beispielhaft bezeichnet ist. Die Punkte 58 und 59 der punktierten Kurve repräsentieren jeweils eine Verlustleistung, die bei gleicher Leistungsabgabe kleiner ist als die entsprechende Verlustleistung, die durch die Kurve 56 repräsentiert ist.

Die Punkte 58 und 59 repräsentieren jeweils einen Betrieb des Elektromotors 1 in Figur 1, bei dem die Leistungsendstufe 4 während des Zeitintervalls 34 in Figur 3 mit zwei zueinander verschiedenen Bestromungsmustern angesteuert wird. Die Verlustleistung ist während des Zeitintervalls 34 kleiner als bei einer Ansteuerung mit nur einem Bestromungsmuster bei gleicher Leistungsabgabe, dargestellt mittels der Kurve 56.

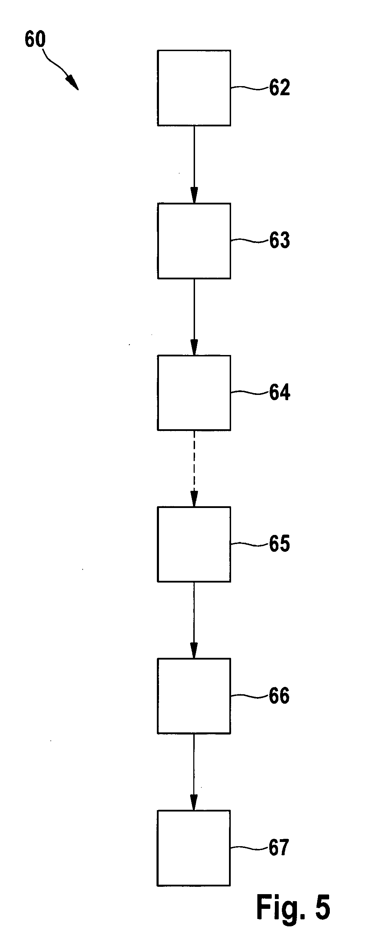

Figur 5 zeigt ein Ausführungsbeispiel für ein Verfahren 60 zum Betreiben eines Elektromotors, insbesondere eines Gleichstrommotors.

In einem Schritt 62 wird der Elektromotor, beispielsweise der in Figur 1 dargestellte Elektromotor 1 mit einer vorbestimmten Leistungsabgabe betrieben und dazu mit einem Bestromungsmuster aus einer vorbestimmten Zahl von vorrätiggehaltenen Bestromungsmustern bestromt.

In einem Schritt 63 wird der Elektromotor mit einer Leistungsabgabe betrieben, die kleiner ist als die maximale Leistungsabgabe und größer ist als die Leistungsabgabe im Schritt 62, wobei der Elektromotor während eines Zeitintervalls im Schritt 63, beispielsweise dem Zeitintervall 34 in Figur 3, mit wenigstens zwei oder genau zwei zueinander verschiedenen Bestromungsmusterintervallen mit jeweils einem Bestromungsmuster bestromt wird, welche in einem vorbestimmtem Verhältnis in dem Zeitintervall enthalten sind.

In einem Schritt 64 wird der Elektromotor mit voller Leistung betrieben. Die Schritte 62, 63 und 64 entsprechen einer Steigerung der Leistungsabgabe des Elektromotors. Der Schritt 65 entspricht dem Schritt 64, der Schritt 66 dem Schritt 63 und der Schritt 67 dem Schritt 62. Nach der Leistungssteigerung auf die volle Leistung zwischen den Schritten 64 und 65 wird - gestrichelt angedeutet - die Leistungsabgabe des Elektromotors in diesem Ausführungsbeispiels reduziert. Die Schritte 65, 66, und 67 entsprechen somit einer Leistungsreduktion der abgegebenen Leistung von voller Leistung über eine kleinere Leistung mit modulierter Bestromungsmuster-Ansteuerung bis hin zu einer Leistungsabgabe kleiner als die Leistung mit modulierter Bestromungsmuster-Ansteuerung, bei der der Elektromotor konstant mit einem Bestromungsmuster angesteuert wird.

Eine beispielhafte Frequenz mit der die Bestromungsmuster einander abwechseln oder die Bestromungsmusterintervalle aufeinander folgen, im Folgenden auch Toggel-Frequenz genannt, beträgt zwischen 250 und 2000 Hertz, bevorzugt 1000 Hertz. Eine Pulsweiten-Modulationsfrequenz beträgt beispielsweise zwischen 15 und 40 Kilohertz, bevorzugt zwischen 18 und 30 Kilohertz. Bevorzugt beträgt die Pulsweiten-Modulationsfrequenz wenigstens das Zwanzigfache der Toggel-Frequenz, bevorzugt wenigstens oder genau das Dreißigfache der Toggel-Frequenz.

## Patentansprüche

1. Elektromotor (1) mit einem Stator (3) und einem Rotor (5) und mit einer Steuereinheit (7), welche mit dem Stator (3) und/oder dem Rotor (5) verbunden und ausgebildet ist, den Stator (3) und/oder Rotor (5) zum Drehbewegen des Rotors (5) zu bestromen,
**dadurch gekennzeichnet, dass**
die Steuereinheit (7) einen Pulsweitenmodulator (6) aufweist, welcher ausgebildet ist, zum Steuern einer Leistungsabgabe des Elektromotors (1) eine vorbestimmte Zahl zueinander verschiedener Bestromungsmuster (20, 21) zu erzeugen, wobei die Bestromungsmuster (20, 21) jeweils eine Leistungsabgabe des Elektromotors (1) repräsentieren und eine zeitliche Folge von Strompulsen mit jeweils einer Strompulsdauer aufweisen, wobei die Steuereinheit (7) ausgebildet ist, zum Ansteuern des Elektromotors (1) mit einer anderen Leistung als durch ein vorbestimmtes Bestromungsmuster repräsentiert, während eines Zeitintervalls (34) des Ansteuerns den Elektromotor gemäß wenigstens zwei zueinander verschiedenen Bestromungsmustern (20, 21) derart zu bestromen, dass eine Leistungsabgabe des Elektromotors im zeitlichen Mittel des Zeitintervalls (34), insbesondere vom Beginn bis zum Ende des Zeitintervalls (34), von den durch die Bestromungsmuster (20, 21) im Zeitintervall (34) repräsentierten Leistungsabgaben verschieden ist, und dass die Verlustleistung während des Intervalls (34) kleiner ist als bei einer Austeuerung mit nur einem Bestromungsmuster bei gleicher Leistungsabgabe.

2. Elektromotor (1) nach Anspruch 1,
**dadurch gekennzeichnet, dass**
die Leistungsabgabe des Elektromotors (1) im zeitlichen Mittel des Zeitintervalls (34) größer ist als die kleinste durch ein Bestromungsmuster (20) repräsentierte Leistungsabgabe im Zeitintervall (34).

3. Elektromotor (1) nach Anspruch 1 oder 2,
**dadurch gekennzeichnet, dass**
die Steuereinheit (7) ausgebildet ist, Bestromungsmusterintervalle (20, 21, 22, 23, 24, 25, 26, 27) jeweils mit einer Zeitdauer kleiner als das Zeitintervall des Ansteuerns (34) zu erzeugen, und den Elektromotor während des Bestromungsmusterintervalls (20, 21, 22, 23, 24, 25, 26, 27) mit einem vorbestimmten Bestromungsmuster zu bestromen, wobei das Zeitintervall (34) nur Bestromungsmusterintervalle (20, 21, 22, 23, 24, 25, 26, 27) aufweist.

4. Elektromotor (1) nach Anspruch 3,
**dadurch gekennzeichnet, dass**
die Leistungsabgabe des Elektromotors (1) im Zeitintervall (34) größer als 80 Prozent und kleiner als 100 Prozent der maximalen Leistungsabgabe des Elektromotors (1) beträgt.

5. Elektromotor (1) nach einem der vorhergehenden Ansprüche,
**dadurch gekennzeichnet, dass**
der Elektromotor (1) ein mittels Bürsten (8, 9) kommutierter Gleichstrommotor (1) ist.

6. Elektromotor (1) nach einem der vorhergehenden Ansprüche,
**dadurch gekennzeichnet, dass**
der Stator des Elektromotors (1) permanentmagnetisch ausgebildet ist.

7. Elektromotor (1) nach einem der vorhergehenden Ansprüche,
**dadurch gekennzeichnet, dass**
die Steuereinheit (7) ausgebildet ist, den Elektromotor (1) mit wenigstens drei oder genau drei zueinander verschiedenen, jeweils einen Betriebszustand repräsentierenden Zeitintervallen (32, 34, 36) anzusteuern, wobei ein Betriebszustand (34) das Zeitintervall (34) mit wenigstens zwei zueinander verschiedenen Bestromungsmustern ist, ein Zeitintervall (36) maximaler Leistung nur das die maximale Leistungsabgabe repräsentierende Bestromungsmuster aufweist und ein weiteres Zeitintervall (32) nur eines der vorbestimmten Bestromungsmuster aufweist, welches eine kleinere Leistungsabgabe repräsentiert als die maximale Leistungsabgabe.

8. Verfahren (60) zum Betreiben eines Elektromotors,
bei dem ein Stator (3) und/oder ein Rotor (5) des Elektromotors (1) zum Drehbewegen des Rotors (5) bestromt wird,
**dadurch gekennzeichnet, dass**
der Elektromotor (1) zum Steuern einer Leistungsabgabe des Elektromotors (1) mit wenigstens einem einer vorbestimmten Zahl zueinander verschiedener Bestromungsmuster (20, 21) angesteuert wird, wobei die Bestromungsmuster (20, 21) jeweils eine Leistungsabgabe des Elektromotors (1) repräsentieren und eine zeitliche Folge von Strompulsen mit jeweils einer Strompulsdauer aufweisen, wobei zum Ansteuern des Elektromotors (1) mit einer anderen Leistung (34) als durch ein vorbestimmtes Bestromungsmuster repräsentiert, während eines Zeitintervalls (34) des Ansteuerns der Elektromotor (1) mit wenigstens zwei zueinander verschiedenen Bestromungsmustern (20, 21) derart bestromt wird, dass eine Leistungsabgabe des Elektromotors im zeitlichen Mittel des Zeitintervalls (34) des Ansteuerns, insbesondere vom Beginn bis zum Ende des Zeitintervalls (34) des Ansteuerns, von den durch die Bestromungsmuster (20, 21) im Zeitintervall (34) des Ansteuerns repräsentierten Leistungsabgaben verschieden ist, und dass die Verlustleistung während des Intervalls (34) kleiner ist als bei einer Ansteuerung mit nur einem Bestromungsmuster bei gleicher Leistungsabgabe.

9. Verfahren (60) nach Anspruch 8,
**dadurch gekennzeichnet, dass**
die Leistungsabgabe des Elektromotors (1) im zeitlichen Mittel des Zeitintervalls (34) des Ansteuerns größer ist als die kleinste durch ein Bestromungsmuster (20) repräsentierte Leistungsabgabe im Zeitintervall (34) des Ansteuerns.

10. Verfahren (60) nach Anspruch 8 oder 9,
**dadurch gekennzeichnet, dass**
zum Bestromen des Elektromotors (1) Bestromungsmusterintervalle (20, 21, 22, 23, 24, 25, 26, 27) jeweils mit einer Zeitdauer kleiner als das Zeitintervall (34) des Ansteuerns erzeugt werden, und der Elektromotor (1) während der Betromungsmusterintervalle (20, 21, 22, 23, 24, 25, 26, 27) mit einem vorbestimmten Bestromungsmuster bestromt wird, wobei das Zeitintervall (34) des Ansteuerns nur Bestromungsmusterintervalle aufweist.

## Claims

1. Electric motor (1) having a stator (3) and a rotor (5) and having a control unit (7) which is connected to the stator (3) and/or to the rotor (5) and is designed to supply current to the stator (3) and/or rotor (5) for the purpose of rotating the rotor (5), **characterized in that**
the control unit (7) has a pulse width modulator (6) which is designed to control a power output from the electric motor (1) by producing a predetermined number of different current supply patterns (20, 21), wherein the current supply patterns (20, 21) each represent a power output from the electric motor (1) and have a chronological sequence of current pulses with a respective current pulse duration, wherein the control unit (7) is designed to actuate the electric motor (1) with a different power than represented by a predetermined current supply pattern during a time interval (34) of actuation by supplying current to the electric motor on the basis of at least two different current supply patterns (20, 21) such that a power output from the electric motor on average over time for the time interval (34), particularly from the start to the end of the time interval (34), is different than the power outputs represented by the current supply patterns (20, 21) in the time interval (34), and that the power loss is smaller during the interval (34) than in the case of actuation with just a current supply pattern at the same power output.

2. Electric motor (1) according to Claim 1, **characterized in that**
the power output from the electric motor (1) on average over time for the time interval (34) is greater than the lowest power output represented by a current supply pattern (20) in the time interval (34).

3. Electric motor (1) according to Claim 1 or 2, **characterized in that**
the control unit (7) is designed to produce current supply pattern intervals (20, 21, 22, 23, 24, 25, 26, 27) with a respective duration shorter than the time interval of actuation (34), and to supply current to the electric motor during the current supply pattern interval (20, 21, 22, 23, 24, 25, 26, 27) using a predetermined current supply pattern, wherein the time interval (34) has only current supply pattern intervals (20, 21, 22, 23, 24, 25, 26, 27).

4. Electric motor (1) according to Claim 3, **characterized in that**
the power output from the electric motor (1) in the time interval (34) is greater than 80 percent and less than 100 percent of the maximum power output from the electric motor (1).

5. Electric motor (1) according to one of the preceding claims,
**characterized in that**
the electric motor (1) is a DC motor (1) commutated by means of brushes (8, 9).

6. Electric motor (1) according to one of the preceding claims,
**characterized in that** the stator of the electric motor (1) is of permanently magnetic design.

7. Electric motor (1) according to one of the preceding claims,
**characterized in that**
the control unit (7) is designed to actuate the electric motor (1) with at least three or precisely three time intervals (32, 34, 36) which are different than one another and each represent an operating state, wherein one operating state (34) is the time interval (34) with at least two different current supply patterns, a time interval (36) of maximum power has only the current supply pattern which represents the maximum power output, and a further time interval (32) has only one of the predetermined current supply patterns which represents a lower power output than the maximum power output.

8. Method (60) for operating an electric motor,
in which current is supplied to a stator (3) and/or a rotor (5) of the electric motor (1) for the purpose of rotating the rotor (5),
**characterized in that**
the electric motor (1) is actuated with at least one of a predetermined number of different current supply patterns (20, 21) for the purpose of controlling a power output from the electric motor (1), wherein the current supply patterns (20, 21) each represent a power output from the electric motor (1) and have a chronological sequence of current pulses with a respective current pulse duration, wherein the electric motor (1) is actuated with a different power (34) than represented by a predetermined current supply pattern during a time interval (34) of actuation by virtue of current being supplied to the electric motor (1) using at least two different current supply patterns (20, 21) such that a power output from the electric motor on average over time for the time interval (34) of actuation, particularly from the start to the end of the time interval (34) of actuation, is different than the power outputs represented by the current supply patterns (20, 21) in the time interval (34) of actuation and that the power loss is smaller during the interval (34) than in the case of actuation with just a current supply pattern at the same power output.

9. Method (60) according to Caim 8,
**characterized in that**
the power output from the electric motor (1) on average over time for the time interval (34) of actuation is greater than the lowest power output represented by a current supply pattern (20) in the time interval (34) of actuation.

10. Method (60) according to Claim 8 or 9,
**characterized in that**
current is supplied to the electric motor (1) by producing current supply pattern intervals (20, 21, 22, 23, 24, 25, 26, 27) for a respective duration shorter than the time interval (34) of actuation, and current is supplied to the electric motor (1) during the current supply pattern intervals (20, 21, 22, 23, 24, 25, 26, 27) using a predetermined current supply pattern, wherein the time interval (34) of actuation has only current supply pattern intervals.

## Revendications

1. Moteur électrique (1) doté d'un stator (3), d'un rotor (5) et d'une unité de commande (7) raccordée au stator (3) et/ou au rotor (5) et configurée pour alimenter en courant le stator (3) et/ou le rotor (5) en vue de mettre le rotor (5) en rotation,
**caractérisé en ce que**
l'unité de commande (7) présente un modulateur (6) de largeur d'impulsions configuré pour former un nombre prédéterminé de motifs (20, 21) d'alimentation en courant différents les uns des autres en vue de commander la puissance délivrée par le moteur électrique (1),
les motifs (20, 21) d'alimentation en courant représentant tous la puissance délivrée par le moteur électrique (1) et comptant une succession temporelle d'impulsions de courant qui présentent chacune une durée d'impulsions de courant,
l'unité de commande (7) étant configurée pour commander le moteur électrique (1) à une puissance différente de celle représentée par un motif prédéterminé d'alimentation en courant, pour délivrer du courant pendant un intervalle de temps (34) de la commande du moteur électrique selon au moins deux motifs (20, 21) d'alimentation en courant différents l'un de l'autre de telle sorte qu'en moyenne temporelle sur l'intervalle de temps (34), en particulier du début à la fin de l'intervalle temporel (34), la puissance délivrée par le moteur électrique soit différente des puissances délivrées représentées par les motifs (20, 21) d'alimentation en courant au cours de l'intervalle de temps (34) et que pendant l'intervalle (34), la puissance de perte est inférieure à celle qui prévaut pendant la commande selon un seul motif d'alimentation en courant pour une même puissance délivrée.

2. Moteur électrique (1) selon la revendication 1, **caractérisé en ce que** la puissance délivrée par le moteur électrique (1) en moyenne temporelle sur l'intervalle de temps (34) est supérieure à la plus petite puissance délivrée représentée par un motif (20) d'alimentation en courant au cours de l'intervalle de temps (34).

3. Moteur électrique (1) selon les revendications 1 ou 2, **caractérisé en ce que** l'unité de commande (7) est configurée pour former des intervalles (20, 21, 22, 23, 24, 25, 26, 27) de motifs d'alimentation en courant qui présentent tous une durée inférieure à celle de l'intervalle de temps de la commande (34) et pour alimenter le moteur électrique selon un motif d'alimentation en courant prédéterminé pendant l'intervalle (20, 21, 22, 23, 24, 25, 26, 27) de motifs d'alimentation en courant, l'intervalle de temps (34) présentant uniquement des intervalles (20, 21, 22, 23, 24, 25, 26, 27) de motifs d'alimentation en courant.

4. Moteur électrique (1) selon la revendication 3, **caractérisé en ce que** la puissance délivrée par le moteur électrique (1) pendant l'intervalle de temps (34) est supérieure à 80 pour cent et inférieure à 100 pour cent de la puissance maximale délivrée par le moteur électrique (1).

5. Moteur électrique (1) selon l'une des revendications précédentes, **caractérisé en ce que** le moteur électrique (1) est un moteur (1) à courant continu commuté par balais (8, 9).

6. Moteur électrique (1) selon l'une des revendications précédentes, **caractérisé en ce que** le stator du moteur électrique (1) présente une magnétisation permanente.

7. Moteur électrique (1) selon l'une des revendications précédentes, **caractérisé en ce que** l'unité de commande (7) est configurée pour commander le moteur électrique (1) avec au moins trois ou exactement trois intervalles de temps (32, 34, 36), différents les uns des autres et représentant chacun un état de fonctionnement, un état de fonctionnement (34) étant l'intervalle de temps (34) qui présente au moins deux motifs d'alimentation en courant différents l'un de l'autre, un intervalle de temps (36) de puissance maximale présentant uniquement le motif d'alimentation en courant qui représente la puissance délivrée maximale et un autre intervalle de temps (32) présentant uniquement un des motifs prédéterminés d'alimentation en courant qui représente une puissance délivrée plus petite que la puissance délivrée maximale.

8. Procédé (60) de conduite d'un moteur électrique, dans lequel un stator (3) et /ou un rotor (5) du moteur électrique (1) sont alimentés en courant pour mettre le rotor (5) en rotation,
**caractérisé en ce que**
pour commander la puissance délivrée par le moteur électrique (1), le moteur électrique (1) est commandé selon au moins un motif (20, 21) d'alimentation en courant parmi un nombre prédéterminé de motifs d'alimentation en courant différents les uns des autres,
**en ce que** les motifs (20, 21) d'alimentation en courant représentent chacun une puissance délivrée par le moteur électrique (1) et comptent une succession temporelle d'impulsions de courant qui présentent chacune une durée d'impulsion de courant,
**en ce que** pour commander le moteur électrique (1) à une puissance (34) différente de celle représentée par un motif prédéterminé d'alimentation en courant, le moteur électrique est alimenté en courant pendant un intervalle de temps (34) de la commande du moteur électrique (1) selon au moins deux motifs (20, 21) d'alimentation en courant différents l'un de l'autre, de telle sorte qu'en moyenne temporelle sur l'intervalle de temps (34), en particulier du début à la fin de l'intervalle temporel (34), la puissance délivrée par le moteur électrique soit différente des puissances délivrées représentées par les motifs (20, 21) d'alimentation en courant au cours de l'intervalle de temps (34) et que pendant l'intervalle (34), la puissance de perte est inférieure à celle qui prévaut pendant la commande selon un seul motif d'alimentation en courant pour une même puissance délivrée.

9. Procédé (60) selon la revendication 8, **caractérisé en ce que** la puissance délivrée par le moteur électrique (1) en moyenne temporelle sur l'intervalle de temps (34) est supérieure à la plus petite puissance délivrée représentée par un motif (20) d'alimentation en courant au cours de l'intervalle de temps (34).

10. Procédé (60) selon les revendications 8 ou 9, **caractérisé en ce que** pour alimenter en courant le moteur électrique (1), des intervalles (20, 21, 22, 23, 24, 25, 26, 27) de motifs d'alimentation en courant sont formés pendant une durée plus petite que celle de l'intervalle de temps (34) de la commande, **en ce que** pendant les intervalles (20, 21, 22, 23, 24, 25, 26, 27) de motifs d'alimentation en courant, le moteur électrique (1) est alimenté en courant selon un motif prédéterminé d'alimentation en courant et **en ce que** l'intervalle de temps (34) de la commande présente uniquement des intervalles de motifs d'alimentation en courant.
